# EUROPÄISCHE PATENTSCHRIFT

(11) **EP 2 311 589 B1**
(45) Veröffentlichungstag und Bekanntmachung des Hinweises auf die Patenterteilung: **02.01.2013**
(21) Anmeldenummer: 10175168.3
(22) Anmeldetag: 03.09.2010
(51) Int. Cl.: B23B 31/16, B23B 31/28

(54) **Spannaggregat**
Tensioning assembly
Agrégat de serrage

(30) Priorität: 12.09.2009 EP 09011695
(43) Veröffentlichungstag der Anmeldung: 20.04.2011
(73) Patentinhaber: Hiestand, Karl, 88630 Pfullendorf (DE)
(72) Erfinder: Hiestand, Karl, 88630 Pfullendorf (DE)
(74) Vertreter: Engelhardt & Engelhardt

(56) Entgegenhaltungen:
- EP-A1- 0 272 394
- EP-A2- 0 234 230
- DE-A1- 3 314 629
- US-A- 4 573 380

## Beschreibung

Die Erfindung bezieht sich auf ein Spannaggregat für Werkzeugmaschinen mit einem mit einer Maschinenspindel drehfest verbindbaren Gehäuse und einem in diesem angeordneten Gewindetrieb, der mit einer mit einem Kraftspannfutter gekoppelten Zugstange zusammenwirkt und mittels dem dem Spannaggregat von einem umschaltbaren elektrischen Antriebsmotor zugeleitete rotatorische Bewegungen in translatorische Verstellbewegungen der Zugstange umwandelbar sind, wobei dem Spannaggregat mindestens ein Stellglied zur Übertragung der rotatorischen Bewegungen des Antriebsmotors nachgeschaltet und dem Gehäuse mindestens ein Eingangsglied zugeordnet sind, auf das das Stellglied einwirkt.

Durch die DE 10 2007 044 309 A1 ist ein Elektrospanner, der ein Spannaggregat dieser Art aufweist, bekannt. Das umlaufende Gehäuse dient hierbei lediglich zur Abstützung eines Hohlrades eines Gleitkeilgetriebes, eine Übertragung der rotierenden Bewegung der Maschinenspindel auf ein Stellglied ist bei dieser Ausgestaltung nicht vorgesehen. Als Stellglied wirkt vielmehr ein Elektromotor auf einen Wellengenerator des Gleitkeilgetriebes ein, durch den über eine Stahlbuchse, die mit einer Außenverzahnung und einer Klauenkupplung versehen ist, der Rollgewindetrieb der Zugstange antreibbar ist. Die rotierenden Verstellbewegungen des über einen Riementrieb mit dem Antriebsrad des Keilwellengetriebes verbundenen Elektromotors können somit zwar in translatorische Verstellbewegungen der Zugstange umgewandelt werden, der Elektromotor ist aber jeweils in Abhängigkeit von der Drehzahl und Drehrichtung des Kraftspannfutters zu steuern, um Verstellbewegungen der Spannbacken auszulösen oder um die Spannkraft zu halten oder zu verändern. Dazu sind, um das Spannaggregat zusammen mit dem Stellmotor als Elektrospanner einsetzen zu können, eine außerordentlich aufwändige Steuereinrichtung sowie zahlreiche Programme erforderlich, in die eine Vielzahl von Parametern eingebunden werden müssen.

Abgesehen von dem sehr großen Steuerungsaufwand ist dadurch bedingt nicht nur eine hohe Störanfälligkeit gegeben, auch die Investitionskosten, insbesondere für die Steuereinrichtung und die verschiedenen Programme, sind erheblich. Vor allem aber ist von Nachteil, dass aufgrund der auf zahlreiche unterschiedliche Gegebenheiten einzustellende Steuerung sehr hohe Anforderungen an das Bedienungspersonal zu stellen sind, und dass eine mechanische Blockierung des Spannaggregates nicht möglich ist. Werkstücke können somit unkontrolliert in dem Kraftspannfutter gelöst werden, dies kann zu folgendschweren Unfällen führen. Dieser bekannte Elektrospanner ist daher in der Praxis nur bedingt einsetzbar.

Durch die EP 234 230 A2, die den --Oberbegriff von Anspruch 1 sildet, ist desweiteren eine Einrichtung zur Betätigung der Spannbacken eines Kraftspannfutters bekannt, die mit einem Verstellglied gekoppelt sind, das zum Erzeugen einer Stell- Drehbewegung einen Steitantrieb aufweist. Eine Sicherungseinrichtung, mittels der bei einer Beschädigung der Übertragungsglieder eine Blockierung zu bewerkstelligen ist, ist bei dieser Ausgestaltung jedoch nicht vorgesehen. Das Kraftspannfutter wird in einem derartigen Fall somit selbsttätig geöffnet oder geschlossen. Eine ausreichende Betriebssicherheit ist demnach nicht gegeben.

Ferner offenbart die EP 0 272 394 A1 die gleiche, zusätzlich mit einer Sicherungseinrichtung ausgestattete Einrichtung, wie die vorgenannte Druckschrift. Um eine Blockierung zu ermöglichen sind dazu zwei entgegengesetzt zueinander verschwenkbar gelagerte Sperrklinken vorgesehen, die mit einem an einer Zahnriemenscheibe verbundenen Zahnkranz zusammenwirken sollen. Diese Sicherungseinrichtung ist jedoch nur in einer Drehrichtung funktionsfähig, da bei einer Spannrichtungsumkehrung die eingerastete Sperrklinke nicht gelöst werden kann. Da ein Kraftspannfutter aber sowohl für Innen- als auch für Außenspannungen und somit für beide Drehrichtungen verwendbar sein muss, ist diese bekannte Einrichtung nicht einsatzfähig.

Aufgabe der Erfindung ist es demnach, ein Spannaggregat für Werkzeugmaschinen zur Übertragung und Umwandlung von Bewegungen zu schaffen, das in sehr vorteilhafter Weise bei elektrischen Spanneinrichtungen, um eine axial gerichtete, dem Kraftspannfutter zuzuleitende Spannkraft zu erzeugen, einsetzbar ist und das über einen langen Zeitraum eine stets sichere und störungsfreie Betriebsweise ermöglicht. Insbesondere bei Betriebsstörungen, beispielsweise bei einer Beschädigung oder einem Bruch eines der Übertragungsglieder, soll kurzfristig und selbsttätig eine Verriegelung des Spannaggregates bewerkstelligt werden, so dass durch Lösen eines eingespannten Werkstückes bedingte Unfälle zuverlässig vermieden werden und somit stets eine hohe Betriebssicherheit gegeben ist.

Gemäß der Erfindung wird dies bei einem Spannaggregat für Werkzeugmaschinen der eingangs genannten Gattung dadurch erreicht, dass dem Spannaggregat und/oder dem Stellglied eine oder mehrer Sicherungseinrichtungen zugeordnet sind, mittels denen bei einer Betriebsstörung, insbesondere bei einer Beschädigung der zwischen dem Antriebsmotor und den Eingangsgliedern vorgesehenen Übertragungsgliedern, dem Gewindetrieb vorgeschaltete Zwischenglieder und/oder ein oder mehrere Bauteile das Stellgliedes selbsttätig durch eine form- oder kraftschlüssige Koppelung mit dem mit der Maschinenspindel der Werkzeugmaschine fest verbundenem Gehäuse des Spannaggregates blockierbar sind.

Die Sicherungseinrichtungen können hierbei jeweils aus einer in einem gesonderten Gehäuse eingesetzten Magnetspule und einem Anker oder einem durch ein Druckmittel, vorzugsweise durch Druckluft, beaufschlagbaren Verstellkolben und einem entgegen der Kraft einer Feder axial verstellbaren an einem Anker oder dem Verstellkolben angebrachten Sicherungsbolzen bestehen, der unmittelbar oder über Zwischenglieder in an den zugeordneten Bauteilen vorgesehene Ausnehmungen einführbar ist.

Bei einer den Zwischengliedern zugeordneten Sicherungseinrichtung ist es angebracht, deren Sicherungsbolzen auf eine an dem Gehäuse entgegen der Kraft einer Feder axial verschiebbar gelagerten Scheibe einwirken zu lassen, an der ein Rastbolzen angebracht ist, der bei Stromausfall und/oder einer Betriebsstörung in dem Stellglied und/oder in den Übertragungsgliedern der Spanneinrichtung zur Aufrechterhaltung der Spannkraft in dem Kraftspannfutter in eine der in die zugekehrte Stirnfläche eines Zahnrades eingearbeitete Ausnehmungen einführbar ist, wobei den Übertragungsgliedern des Stellgliedes kapazitive Sensoren, optische Sensoren oder Lichtschranken, mittels denen der Betriebszustand der Übertragungsglieder überwachbar ist, zugeordnet sein sollten, die an die den Zwischengliedern zugeordnete Sicherungseinrichtung angeschlossen sind.

Bei einer Sicherungseinrichtung, die einem mit einem umlaufenden Getriebegehäuse zur Aufnahme eines Untersetzungsgetriebes versehenen Stellglied zugeordnet ist, sollte deren Sicherungsbolzen bei Stromausfall zur Aufrechterhaltung der Spannkraft im Kraftspannfutter unmittelbar in eine der in eine der Stirnflächen des Getriebegehäuses eingearbeitete Ausnehmungen selbsttätig einführbar sein.

Bei einer Sicherungseinrichtung, die einem mit umlaufenden Riemenscheiben als Übertragungsglieder versehenen Stellglied zugeordnet ist, sollte dagegen der Sicherungsbolzen unmittelbar oder über eine entgegen der Kraft einer Feder axial verschiebbaren umlaufenden Scheibe, die mit einem Raststift versehen ist, mit einer mit Ausnehmungen ausgestatteten Riemenscheibe zusammenwirken.

Nach einer weiteren Ausführungsvariante ist vorgesehen, dass die Sicherungseinrichtung durch ein an dem Übertragungsglied durch die Kraft einer oder mehrerer Federn seitlich anliegendes Koppelglied, z.B. in Form eines Ringes, zu bilden, das axial verschiebbar gelagert und mit dem Gehäuse drehfest verbunden ist, und wobei bei einer Beschädigung des Übertragungsgliedes das Koppelglied mit einem das Übertragungsglied tragenden und mit dem Spannaggregat verbundenen Bauteil, beispielsweise mit einem der Eingangsglieder formschlüssig, z.B. mittels einrückbarer Verzahnungen oder in Ausnehmungen einführbarer Riegelbolzen, koppelbar ist.

Bei einem Zahnriemen als Übertragungsglied sollte hierbei das Koppelglied z.B. mittels einer Innenverzahnung mit der Verzahnung des Eingangsgliedes koppelbar sein. Bei einem Flachriemen als Übertragungsglied sollte dagegen das Koppelglied z.B. mittels zusammenwirkender Stirnverzahnungen mit einem das Übertragungsglied tragenden Bauteil, z.B. eine Hohlwelle, koppelbar sein.

Zweckmäßig ist es bei dieser Ausgestaltung der Sicherheitseinrichtung auch, das Koppelglied mittels eines oder mehrerer an dem Gehäuse angebrachte axial gerichtete Bolzen drehfest mit diesem zu verbinden und verschiebbar auf dem Bolzen zu lagern, und zwischen dem Koppelglied und dem Übertragungsglied eine Anlagescheibe drehfest anzuordnen.

Ferner kann nach einer weiteren Ausführungsvariante das Koppelglied auch durch einen oder mehrere radial angeordnete und durch dieses über Schrägflächen verstellbaren Rastbolzen, der in ein ein Eingangsglied tragendes Bauteil, z.B. die Hohlwelle, eingearbeitete Ausnehmung einführbar ist, mit diesem drehfest verbindbar sein.

Um bei einer Störung an einem der Übertragungsglieder auf einfache Weise ein Signal an die Maschinensteuerung übermitteln zu können, ist ferner vorgesehen, der Sicherungseinrichtung einen oder mehrere mit dem Koppelglied unmittelbar oder über Zwischenglieder zusammenwirkende Anschlagschalter oder Endschalter zuzuordnen, mittels denen über eine Steuereinheit die Werkzeugmaschine abschaltbar ist.

Wird ein Spannaggregat für Werkzeugmaschinen gemäß der Erfindung ausgebildet, so ist es nicht nur möglich, die Drehbewegungen der Maschinenspindel über das Spannaggregat zu führen und die Verstellbewegungen von unterschiedlich gestalteten elektrischen Spanneinrichtungen mit Hilfe des Spannaggregates in axiale Verstellbewegungen umzuwandeln und unmittelbar auf eine Zugstange zu übertragen, sondern es ist jederzeit auch eine hohe Betriebssicherheit gegeben. Der Bauaufwand, mittels dem dies zu bewerkstelligen ist, ist sehr gering, auch ist von Vorteil, dass zur Steuerung keine aufwändigen elektrischen Steuereinrichtungen und Programme zur Verstellung und Anpassung des Kraftspannfutters an unterschiedliche Betriebsbedingungen notwendig sind. Die vorschlagsgemäße Ausgestaltung ermöglicht somit bei einfacher Handhabung über einen langen Zeitraum eine sichere und störungsfreie Betriebsweise sowie einen vielseitigen Einsatz.

Des Weiteren ist sichergestellt, dass bei einem Stromausfall und/oder bei irgendwelchen andersartigen Betriebsstörungen in den Spanneinrichtungen, insbesondere bei einem Bruch oder einer Beschädigung der Übertragungsglieder, letztlich die Zugstange mit Hilfe der Sicherungseinrichtungen sofort blockiert wird. Auch bei einem Nachlauf der Maschinenspindel ist somit eine Minderung der Spannkraft des Kraftspannfutters oder ein Öffnen der Spannbacken ausgeschlossen. Auf diese Weise werden zuverlässig Betriebsunfälle vermieden.

In der Zeichnung sind einige Ausführungsvarianten der gemäß der Erfindung ausgebildeten bei einem Spannaggregats für Werkzeugmaschinen verwendbaren Sicherungseinrichtung dargestellt und nachfolgend im Einzelnen erläutert ist. Hierbei zeigt:
- Figur 1: das an einer Maschinenspindel einer Werkzeugmaschine angebaute Spannaggregat mit einer elektrischen Spanneinrichtung als Stellglied und mit unterschiedlichen Bauteilen zusammenwirkende Sicherungsein- richtung, in einem Axialschnitt,
- Figur 2: das Spannaggregat nach Figur 1 mit einer andersartigen elektrischen Spanneinrichtung, einem unterschiedlichen Zwischenglied und einer andersartigen Anordnung der Sicherheitseinrichtung,
- Figur 3: das Spannaggregat mit Spanneinrichtung nach Figur 2, in Seitenan- sicht,

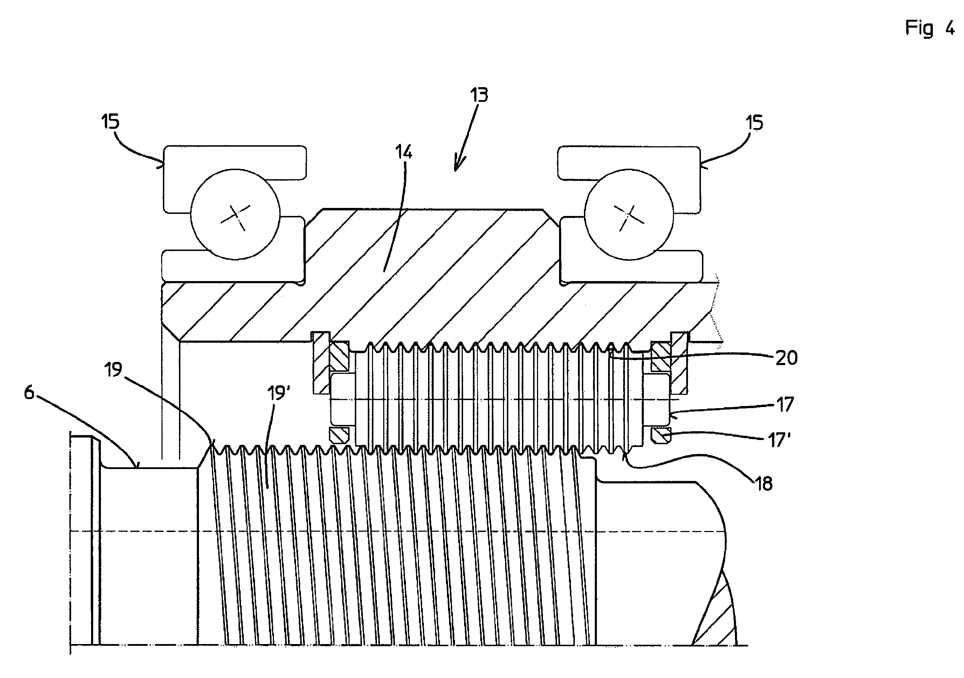

- Figur 4: den bei den Spannaggregaten nach den Fig. 1 und 2 verwendeten Ge- windetrieb in einer vergrößerten Darstellung und in einem Axialschnitt,
- Figuren 5 bis 7: weitere Ausführungsvarianten der den Übertragungsgliedern des Spannaggregates zugeordneten Sicherheitseinrichtungen.

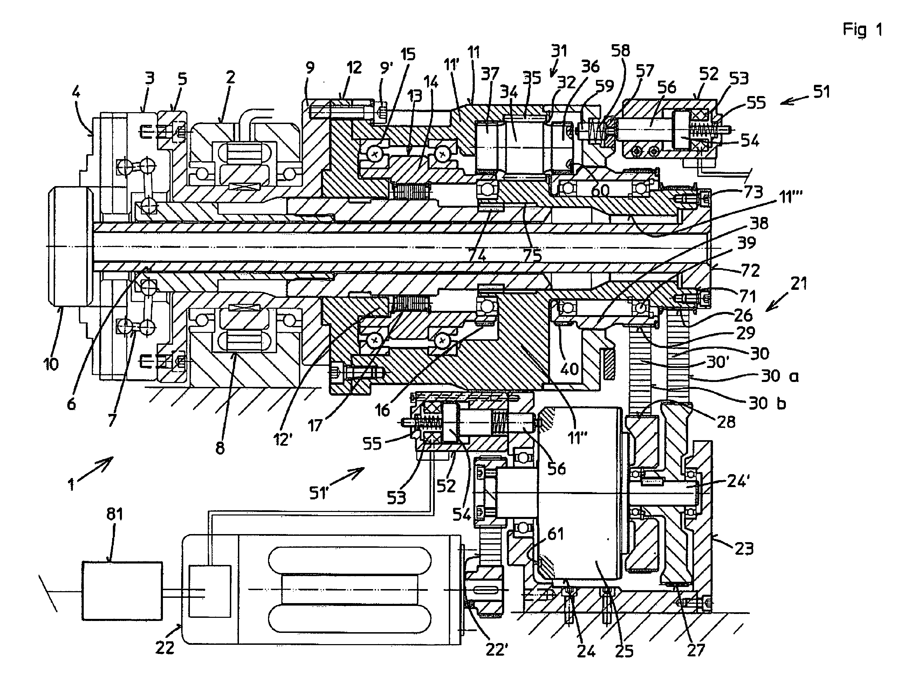

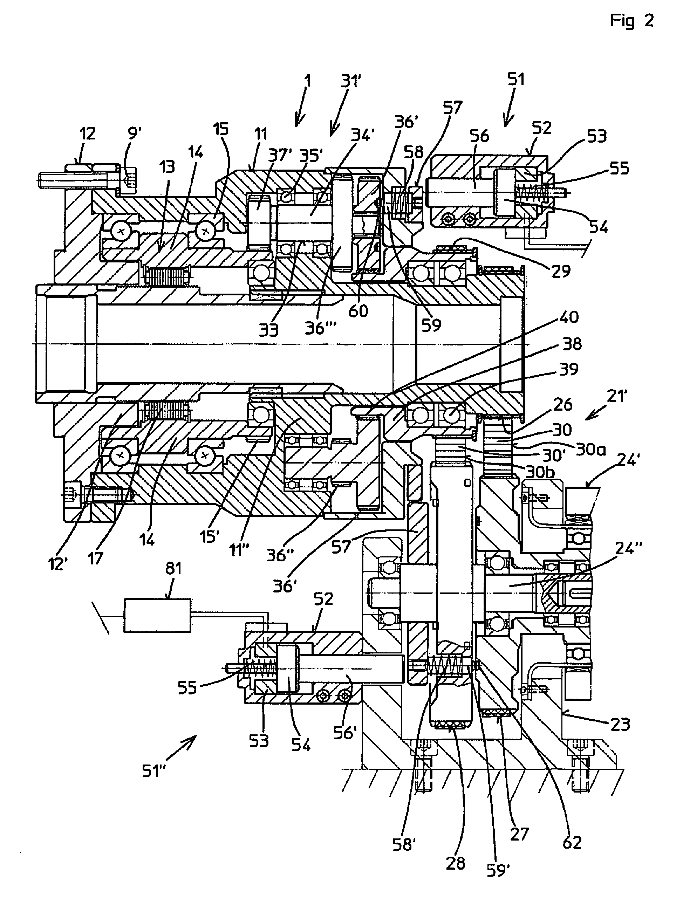

Das in den Figuren 1 und 2 dargestellte und jeweils mit 1 bezeichnete Spannaggregat dient zur Übertragung einer rotierenden Bewegung einer Maschinenspindel 5 einer Werkzeugmaschine 2 auf ein als elektrische Spanneinrichtung ausgebildetes Stellglied 21 bzw. 21' sowie zur Umwandlung der von diesen dem Spannaggregat 1 zugeführten rotatorischen Verstellbewegungen in translatorische Bewegungen, die einem auf der Werkzeugmaschine 2 angeordneten Kraftspannfutter 3, in dem ein Werkstück 10 zur Bearbeitung einzuspannen ist, zuzuführen sind. Das Kraftspannfutter 3 weist dazu radial verstellbare Spannbacken 4 auf, die über Umlenkhebel 7 durch eine axial betätigbare Zugstange 6 verstellbar sind.

Das Spannaggregat 1 besteht hierbei aus einem Gehäuse 11, das mittels Schrauben 9' an einem an der Maschinenspindel 5 vorgesehenen Flansch 9 befestigt ist, und einem Gewindetrieb 13, der über ein Zwischenglied 31 bzw. 31' mit dem Stellglied 21 bzw. 21' sowie der Zugstange 6 in Triebverbindung steht. Das Gehäuse 11, das als abgestufte Hohlwelle 11' ausgebildet und durch einen T-förmig ausgestalteten Deckel 12 verschlossen ist, ist über den Flansch 9 fest mit der durch einen Elektromotor 8 antreibbaren Maschinenspindel 5 gekoppelt und läuft mit dieser um. Außerdem ist auf dem Gehäuse 11 in dem dem Flansch 9 gegenüberliegenden Endbereich ein Abtriebsglied in Form einer Riemenscheibe 26 angeordnet, über die die Drehbewegungen der Maschinenspindel 5 dem Stellglied 21 bzw. 21' zugeleitet werden. Über einen Keil 74, der in einer in die Hohlwelle 11''' eingearbeiteten Längsnut 75 geführt ist, ist das Gehäuse 11 auch drehfest mit der axial verschiebbaren Zugstange 6 verbunden.

Der Gewindetrieb 13 weist eine mittels Lager 15 in dem Gehäuse 11 drehbar und axial unverschiebbar abgestützte Hohlwelle 14 sowie mehrere gleichmäßig über den Umfang verteilt angeordnete Treibrollen 17 auf, die in an der Hohlwelle 14 abgestützte Führungskäfige 17' gehalten sind und die in eine auf der Zugstange 6 angeordnete Gewindespindel 19 eingreifen. Mittels parallel zueinander angeordneter Erhöhungen 18, die mit in die Innenmantelfläche der Hohlwelle 14 eingearbeitete Führungsrillen 20 zusammenwirken, ist die Treibrolle 17 mit der Hohlwelle 14 trieblich verbunden. Wird die Hohlwelle 14 angetrieben, so werden die Treibrollen 17 in Rotation versetzt und durch deren Erhöhungen 18, die tangential in ein in die Gewindespindel 19 eingearbeitete Gewinderillen 19' eingreifen, wird diese je nach Drehrichtung der Hohlwelle 14 und der gewählten Steigung der Gewinderillen 19' mehr oder weniger nach rechts oder links verschoben. Durch den in das Gehäuse 11 ragenden Ansatz 12' des Deckels 12 wird der Gewindetrieb 13, insbesondere die Treibrollen 17 mit abgestützt.

Das Stellglied 21 ist mit einem Servomotor 22 ausgestattet, der über einen Riementrieb 22' auf ein in einem Gehäuse 24 eingebautes Getriebe 25 einwirkt. Die Abtriebswelle 24' des Getriebes 24 ist hierbei in einem ortsfest angeordneten Träger 23 gelagert, und auf dieser sind zwei Riemenscheiben 27 und 28 abgestützt, die über Treibriemen 30 und 30' als Übertragungsglieder 30a und 30b mit Riemenscheiben 26 und 29 zusammenwirken, die an dem Gehäuse 11 bzw. an einer mittels Lager 39 drehbar gelagerten Hohlwelle 38 angebracht sind. Von dem Gehäuse 11 werden somit die Drehbewegungen der Maschinenspindel 5 über die Riemenscheibe 26 als Antriebsglied und den Treibriemen 30 auf die Riemenscheibe 27 übertragen. Die mittels des Servomotors 22 und dem Getriebe 24 in Abhängigkeit von dem jeweils mittels eines Steuergerätes 81 dem Servomotor 22 übermittelten Signale, durch die Verstellbewegungen zur Erhöhung oder Reduzierung der Spannkraft in dem Kraftspannfutter 3 sowie zur Lageänderung der Spannbacken 4 ausgelöst werden, werden dagegen über die Riemenscheiben 28 und 29 als Eingangsglied des Spannaggregates 1 sowie den Treibriemen 30' auf die Hohlwelle 38 übertragen.

Zur Weiterleitung der Verstellbewegungen ist die Hohlwelle 38 mit einer Verzahnung 40 ausgestattet, die gemäß Fig. 1 mit einem Zahnrad 36 der mehrfach vorgesehenen und gleichmäßig über den Umfang verteilt angeordnete Zwischenglieder 31 zusammenwirkt. Die Zahnräder 36 sind jeweils an einer Welle 34 angearbeitet, die mittels Lager 35 in einer Zwischenwand 11" des Gehäuses 11 außermittig drehbar gelagert sind und ein weiteres Zahnrad 37 tragen, das in eine in die Hohlwelle 14 des Gewindetriebes 13 eingearbeitete Verzahnung 16 eingreift. Die rotatorischen Verstellbewegungen des Servomotors 22 werden somit über den Gewindetrieb 13 in axiale Verstellbewegungen der Zugstange 6 umgewandelt.

Bei dem andersartig ausgebildeten Stellglied 21' nach Figur 2 ist der Servomotor, auf dessen Motorwelle 24" die Riemenscheiben 27 und 28 angeordnet sind, nicht dargestellt. Auch ist das Zwischenglied 31' als zweistufiges Untersetzungsgetriebe 33 ausgebildet, dessen Zahnräder 36"' und 37' wiederum auf einer Welle 34' angeordnet sind. Das Zahnrad 36', das mit der Hohlwelle 38 zusammenwirkt, ist über ein weiteres drehbar in der Zwischenwand 11" des Gehäuses 11 gelagerte Zahnrad 36" mit dem Zahnrad 36"' in Triebverbindung. Auf diese Weise ist eine erhebliche Untersetzung der eingeleiteten Rotationsbewegungen zu bewerkstelligen.

Um bei einem Stromausfall und/oder bei irgendwelchen Betriebsstörungen im Bereich des Stellgliedes 21 bzw. 21', beispielsweise bei einem Bruch der Treibriemen 30 und/oder 30', die Spannkraft im Kraftspannfutter 3 aufrechtzuerhalten, so dass bei einem Nachlauf der Maschinenspindel 5 keine Veränderung des Spannzustandes der Spannbacken 4 hervorgerufen werden kann, sind das Spannaggregat 1 sowie die Stellglieder 21 bzw. 21' jeweils mit einer Sicherungseinrichtung 51 bzw. 51' bzw. 51" versehen. Die Sicherungseinrichtungen 51, 51' und 51" bestehen hierbei jeweils im Wesentlichen aus einem ortsfest angeordneten gesonderten Gehäuse 52, in dem eine Magnetspule 53 sowie ein durch diese betätigbarer Anker 54 eingesetzt sind. Der Anker 54 ist entgegen der Kraft einer Druckfeder 55 verstellbar und mit einem Sicherungsbolzen 56 versehen, der unmittelbar oder über Zwischenglieder in Ausnehmungen 60, 61 oder 62 des jeweils zugeordneten Bauteils einführbar ist.

Bei der Sicherungseinrichtung 51 nach Figur 1 wirkt der Sicherungsbolzen 56 auf eine Scheibe 57 ein, die ebenfalls entgegen der Kraft einer Druckfeder 58 verschiebbar auf dem Gehäuse 11 gelagert und an der ein weiterer Bolzen 59 angebracht ist, der in eine der in das Zahnrad 36 eingearbeitete Ausnehmungen 60 einführbar ist. Ist die Magnetspule 53 erregt, wird der Anker 54 durch diese entgegen der Kraft der Feder 55 in der dargestellten Betriebsstellung gehalten. Fällt jedoch der Strom aus und wird keine Magnetkraft mehr auf den Anker 54 ausgeübt, wird durch die Kraft der Feder 55 der Anker 54 sofort nach links verschoben und gegen die Scheibe 57 gedrückt, die, versehen mit dem Bolzen 59, ebenfalls nach links verstellt wird. Dadurch rastet der Bolzen 59 in eine der an dem Zahnrad 36 bzw. 36' vorgesehenen Ausnehmungen 60 ein, das Zwischenglied 31 bzw. 31' und die mit diesem gekoppelten Bauteile, nämlich der Gewindetrieb 13 und die Zugstange 6, sind somit blockiert, so dass eine Lageänderung der Spannbacken 4 des Kraftspannfutters 3 und demnach eine Änderung des Spannzustandes auch bei einem Nachlauf der Maschinenspindel 5 nicht erfolgen kann.

Die Sicherungseinrichtung 51' ist dem Getriebe 24 der Spanneinrichtung 21 zugeordnet und in gleicher Weise aufgebaut. Der Sicherungsbolzen 56 greift hierbei unmittelbar in eine der in eine Stirnfläche des Gehäuses 25 eingearbeiteten Ausnehmungen 61 ein, so dass auf diese Weise das Stellglied 21 blockiert ist und keine Verstellung der Spannbacken 4 des Kraftspannfutters 3 erfolgen kann.

Die in Figur 2 eingezeichnete Sicherungseinrichtung 51" wirkt, um die Spannung im Kraftspannfutter 3 bei Stromausfall und/oder einer andersartigen Betriebsstörung aufrechtzuerhalten, mit der Riemenscheibe 28 des Stellgliedes 21' zusammen. Durch eine entgegen der Kraft einer Feder 58' axial verschiebbare Scheibe 57', gegen die der Sicherungsbolzen 56' der Sicherungseinrichtung 51" bei Stromausfall gedrückt wird, wird hierbei wiederum entgegen der Kraft der Feder 58' ein Bolzen 59' verstellt, der in eine der an der Riemenscheibe 29 vorgesehenen Ausnehmungen 62 einrasten kann.

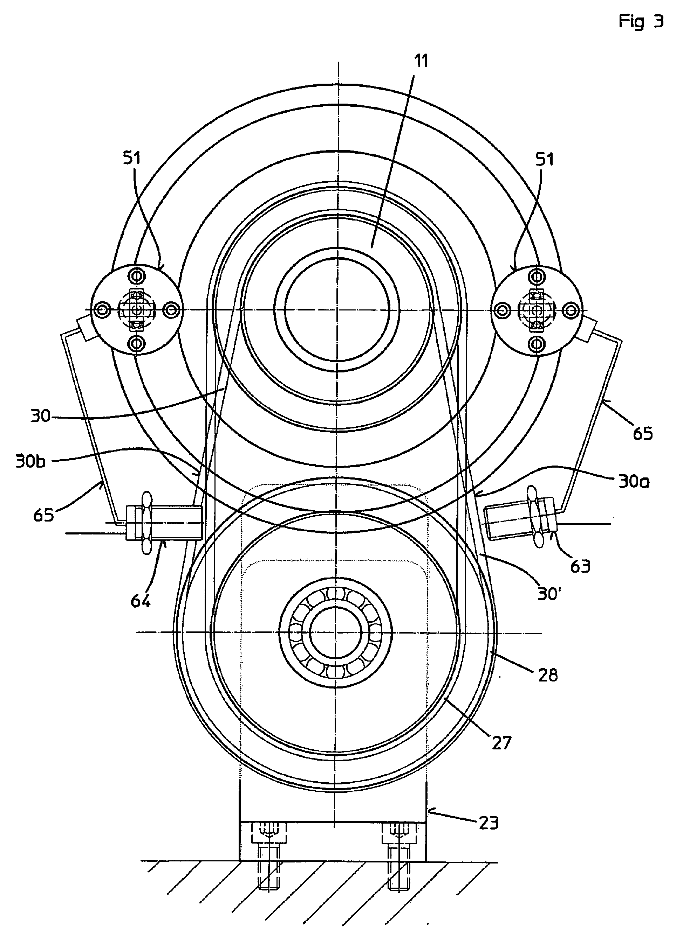

Um den Betriebszustand der Übertragungsglieder 30a und 30b, d.h. der Treibriemen 30 und/oder 30' zu überwachen, sind diesen, wie dies der Figur 3 zu entnehmen ist, kapazitive Sensoren 63 bzw. 64 zugeordnet, deren Signale über Signalleitungen 65 der Sicherungseinrichtung 51 zugeleitet werden. Bei einem Bruch der Treibriemen 30 und/oder 30' wird somit das Spannaggregat 1 blockiert, und durch ungewünschtes Lösen des Werkstückes 10 in dem Kraftspannfutter 3 bedingte Unfälle werden somit zuverlässig vermieden.

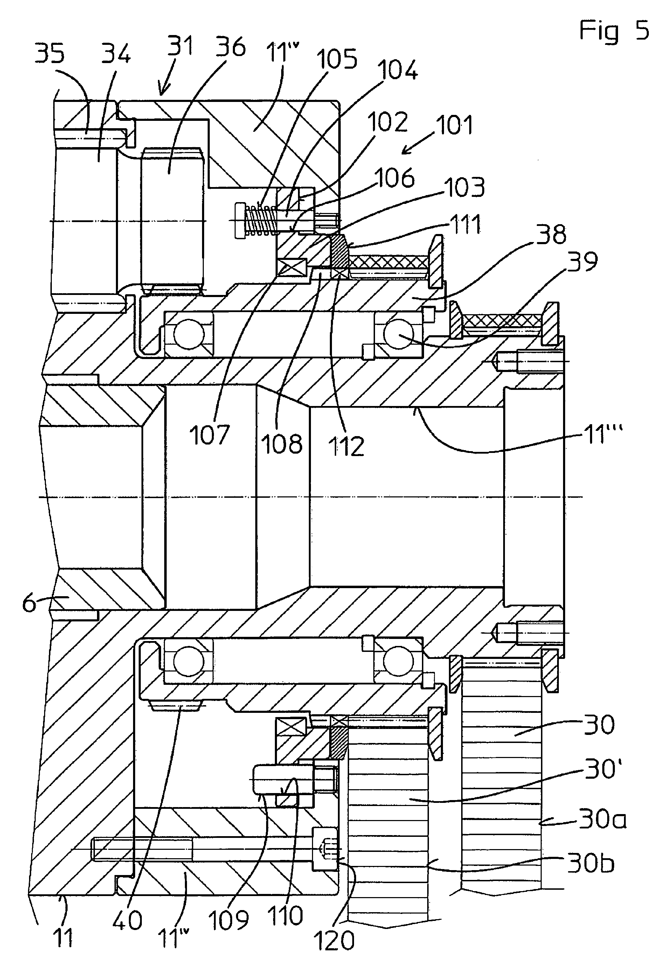

Die in den Figuren 5 bis 8 dargestellten Sicherheitseinrichtungen 101, 101', 101" sowie 121 sind den als Zahnriemen 30, 30' bzw. als Flachriemen 30" und 30"' ausgebildeten Übertragungsgliedern 30a, 30b bzw. 30a' und 30b' unmittelbar zugeordnet, um bei einem Bruch und/oder einer Beschädigung der Zahnriemen 30' und/oder 30' bzw. 30" und/oder 30"' sofort eine formschlüssige Verbindung zwischen den als Eingangsglieder wirksamen Hohlwellen 11"' und 38, mit denen die Zahnriemen 30 und 30' zusammenwirken und dem Gehäuse 11, selbsttätig herzustellen.

Nach Figur 5 besteht die Sicherungseinrichtung 101 aus einem als Ring 103 ausgebildeten Koppelglied 102, das auf einem oder mehreren in das Gehäuse 11 eingeschraubte Bolzen 104 axial verschiebbar gelagert ist. Die Bolzen 104 durchgreifen dazu jeweils eine in den Ring 103 eingearbeitete Bohrung 106. Außerdem ist auf dem Bolzen 104 eine Druckfeder 105 angeordnet, die auf den Ring 103 einwirkt. Über eine Anlagescheibe 111, die mittels einer Innenverzahnung 112 drehfest auf der Hohlwelle 38 gelagert ist, liegt das Koppelglied 102, das mit einer Innenverzahnung 107 versehen ist, durch die Kraft der Druckfeder 105 seitlich an dem Zahnriemen 30' an. Außerdem ist das Koppelglied 102 durch einen in das Gehäuse 11 eingeschraubten Bolzen 109, der eine in den Ring 103 eingearbeitete Bohrung 110 durchgreift, drehfest mit einem Abschlussdeckel 11^{IV} des Gehäuses 11, der mittels einer Schraube 120 an dem Gehäuse 11 befestigt ist, verbunden.

Wird der Zahnriemen 30' auch nur teilweise beschädigt, so wird durch die Kraft der Druckfeder 105 das Koppelglied 102 nach rechts verschoben und die an dem Ring 103 eingearbeitete Verzahnung 107 wird in die Verzahnung 108, die an der Außenmantelfläche der Hohlwelle 38 vorgesehen ist, eingeführt. Auf diese Weise ist die Hohlwelle 38 formschlüssig mit dem Gehäuse 11 gekoppelt, so dass auch die Zwischenglieder 31 und die gesamten beweglichen Bauteile des Spannaggregates mit der Maschinenspindel 5 drehfest verbunden sind. Ungewollte Verstellbewegungen der Zugstange 6 können demnach nicht vorgenommen werden, so dass die Spannkraft in dem Kraftspannfutter 3 aufrechterhalten bleibt und Unfälle durch ein gelöstes Werkstück 10 zuverlässig vermieden werden.

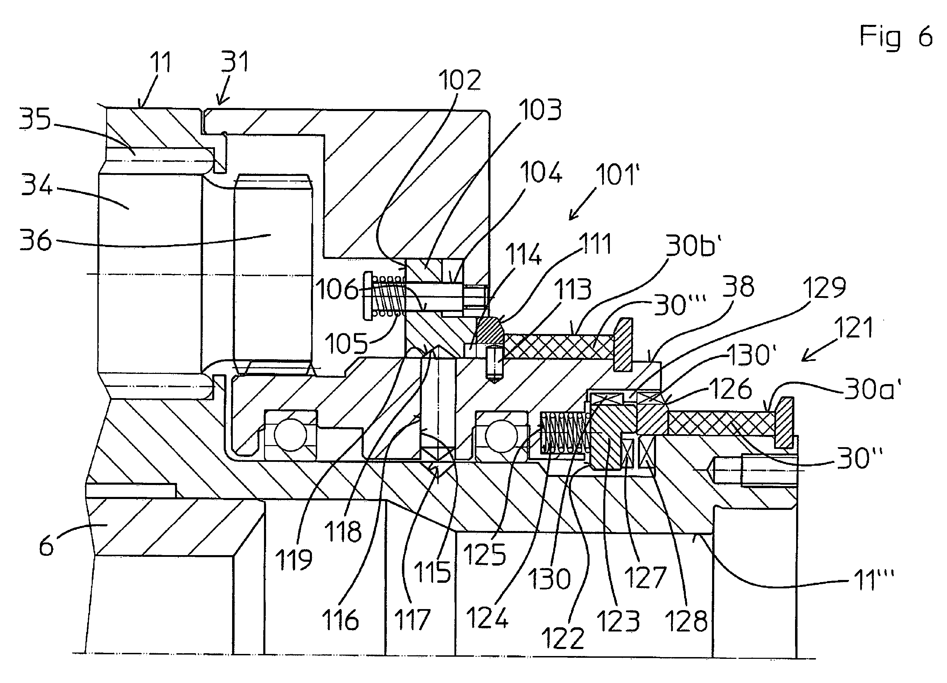

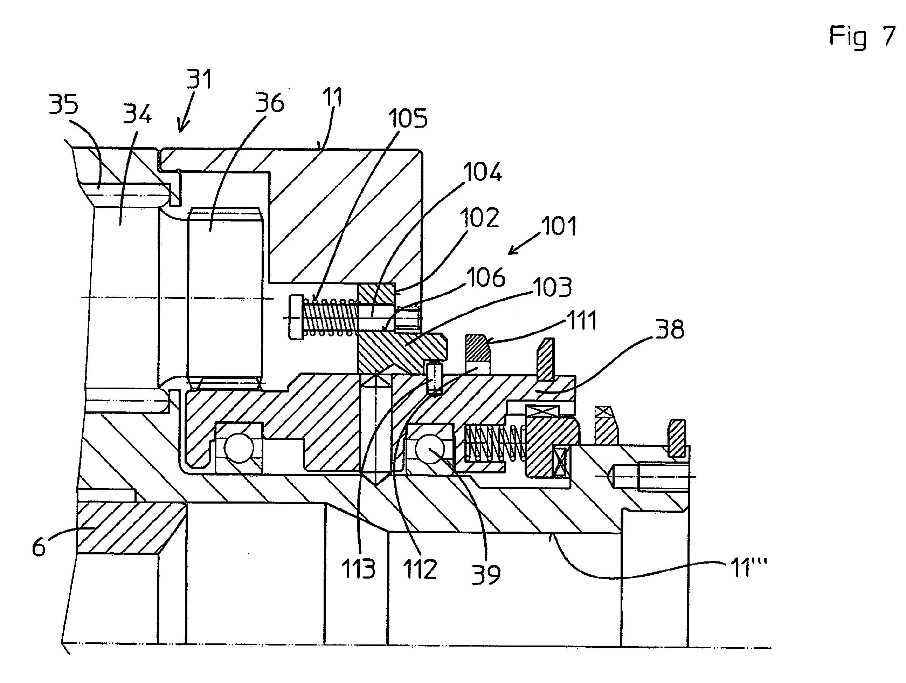

Bei der Sicherungseinrichtung 101' nach den Figuren 6 und 7, dient zur Verriegelung des Koppelgliedes 102 mit der Hohlwelle 11"' ein Rastbolzen 116, der in eine in der Hohlwelle 38 vorgesehene radial gerichtete Bohrung 115 verstellbar eingesetzt ist. Zur Verschiebung des Rastbolzens 116 sind das Koppelglied 102 und auch der Rastbolzen 116 mit einander zugeordneten Schrägflächen 118 und 119 versehen und in die Hohlwelle 11"' sind mehrere kegelförmige Ausnehmungen 117 eingearbeitet, in die der Rastbolzen 116 mit einer kegeligen Stirnfläche einführbar ist.

Bei einer Beschädigung des als Flachriemen 30"' ausgebildeten Übertragungsgliedes 30b" wird durch die Kraft der Feder 105 das Koppelglied 102, das über die Anlagescheibe 111 seitlich an dem Flachriemen 30"', wie dies in Figur 6 gezeigt ist, nach rechts verschoben, und der Rastbolzen 116 wird dadurch in die Ausnehmung 117 gedrückt. Die Hohlwelle 38 ist somit mit der Hohlwelle 11"' verriegelt und das Zwischenglied 31 und das Spannaggregat 1 sind wiederum blockiert. Die Anlagescheibe 111 ist bei dieser Ausgestaltung durch eine Madenschraube 113, die in Blockierstellung des Koppelgliedes 102 in eine in dieses eingearbeitete ringförmige Ausnehmung 114 eingreift, drehfest mit der Hohlwelle 38 verbunden.

Die des Weiteren in den Figuren 6 und 7 gezeigte Sicherungseinrichtung 121 besteht ebenfalls aus einem als Ring 123 gestalteten Koppelglied 122, das durch die Kraft einer in eine in die Hohlwelle 38 eingearbeitete Bohrung 124 eingesetzte Druckfeder 125 über eine Anlagescheibe 126 seitlich an dem Flachriemen 30" anliegt. Über eine Stirnverzahnung 127, die in eine an der Hohlwelle 11"' vorgesehene Stirnverzahnung 128 einführbar ist, ist das Koppelglied 122 mittels einer in eine Verzahnung 129 der Hohlwelle 38 eingreifende Verzahnung 130 mit dieser formschlüssig verbunden. Mittels einer Verzahnung 130' greift die Anlagescheibe 124 ebenfalls in die Verzahnung 129 der Hohlwelle 38 ein. Bei einer Störung gemäß Figur 7 greifen die Stimverzahnungen 127 und 128 ineinander, so dass die beiden Hohlwellen 11"' und 38 miteinander verbunden sind und somit das Spannaggregat 1 wiederum blockiert ist.

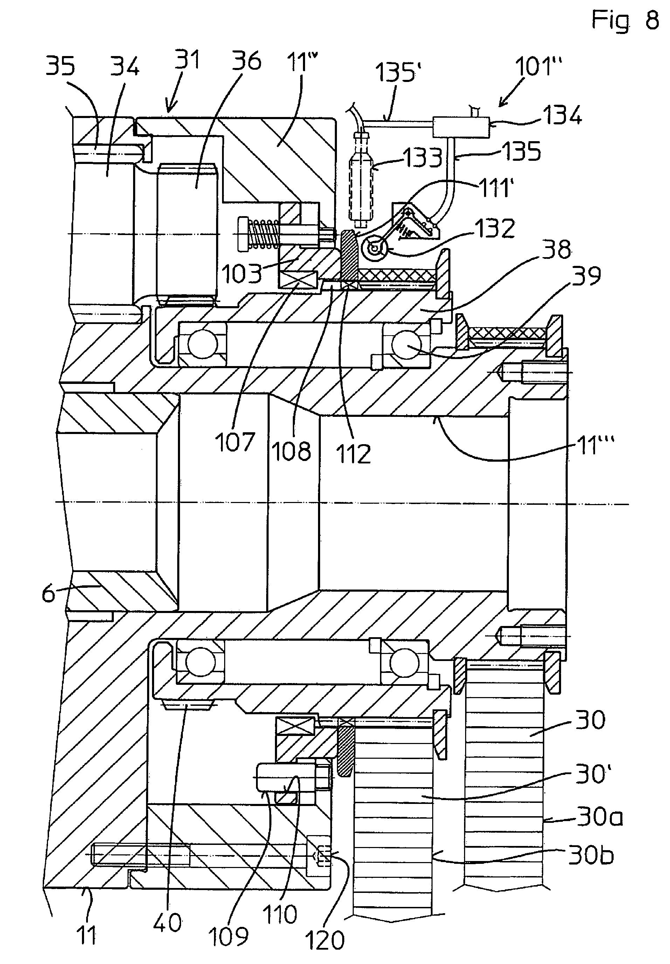

Nach Figur 8 kann dem Koppelglied 102 auch ein Anschlagschalter 132 oder ein Endschalter 133 zugeordnet sein, die durch die Anschlagscheibe 111' betätigbar sind. Durch eine Axialverschiebung der Anschlagscheibe 111' wird bei einem Bruch des Zahnriemens 30' der Anschlagschalter 132 bzw. der Endschalter 133 betätigt, von denen über Signalleitungen 135 bzw. 135' ein Signal einer Steuereinheit 134 zugeleitet werden, durch die die Werkzeugmaschine 2 stillgesetzt und auf diese Weise ein Entspannen eines Werkstückes vermieden wird.

Da das Gehäuse 11 als Hohlkörper 11' ausgebildet ist und somit eine zentrale Bohrung 11"' aufweist, ist es möglich, in dem Gehäuse 11 und der Zugstange 6 eine Anschlagwelle 72 oder bei Stangenbearbeitung ein Führungsrohr anzuordnen. Somit können in dem Kraftspannfutter 3 eingespannte Werkstücke 10 oder das Spannaggregat 1 durchgreifende Stangen mittels der Anschlagwelle 72 oder einem Führungsrohr angestützt werden. An dem Hohlkörper 11' ist dazu eine gestufte Anlagefläche 71 angearbeitet, an der die Anschlagwelle 72 anliegt. Mittels Schrauben 73 ist die Anschlagwelle 72 an dem Hohlkörper 11' befestigt.

Selbstverständlich ist es möglich, dem Spannaggregat 1 auch andersartig ausgebildete Stellglieder, z. B. in Form eines Elektromotors, nachzuschalten, um die von diesen zugeleitete Stellbewegungen in dem Spannaggregat 1 in axiale Verstellbewegungen für die Zugstange 6 umzuwandeln.

## Patentansprüche

1. Spannaggregat (1) für Werkzeugmaschinen (2) mit einem mit einer Maschinenspindel (5) drehfest verbindbaren Gehäuse (11) und einem in diesem angeordneten Gewindetrieb (13), der mit einer mit einem Kraftspannfutter (3) gekoppelten Zugstange (6) zusammenwirkt und mittels dem dem Spannaggregat (1) von einem umschaltbaren elektrischen Antriebsmotor (22) zugeleitete rotatorische Bewegungen in translatorische Verstellbewegungen der Zugstange (6) umwandelbar sind, wobei dem Spannaggregat (1) mindestens ein Stellglied (21, 21') zur Übertragung der rotatorischen Bewegungen des Antriebsmotors (22) nachgeschaltet und dem Gehäuse (11) mindestens ein Eingangsglied (26, 29) zugeordnet ist, auf das das Stellglied (21, 21') einwirkt,
**dadurch gekennzeichnet,**
**dass** dem Spannaggregat (1) und/oder dem Stellglied (21, 21') eine oder mehrer Sicherungseinrichtungen (51, 51', 51"; 101, 101', 101 "; 121) zugeordnet sind, mittels denen bei einer Betriebsstörung, insbesondere bei einer Beschädigung der zwischen dem Antriebsmotor (22) und den Eingangsgliedern (26, 29) vorgesehenen Übertragungsglieder (30a, 30b), dem Gewindetrieb (13) vorgeschaltete Zwischenglieder (31) und/oder ein oder mehrere Bauteile des Stellgliedes (21, 21') selbsttätig durch eine form- oder kraftschlüssige Koppelung mit dem mit der Maschinenspindel (5) der Werkzeugmaschine (2) fest verbundenen Gehäuse (11) des Spannaggregates (1) blockierbar sind.

2. Spannaggregat nach Anspruch 1,
**dadurch gekennzeichnet,**
**dass** die Sicherungseinrichtungen (51, 51', 51") jeweils aus einer in einem gesonderten Gehäuse (52) eingesetzten Magnetspule (53) und einem Anker (54) oder einem durch ein Druckmittel, vorzugsweise durch Druckluft, beaufschlagbaren Verstellkolben und einem entgegen der Kraft einer Feder (55) axial verstellbaren an dem Anker (54) oder dem Verstellkolben angebrachten Sicherungsbolzen (56) bestehen, der unmittelbar oder über Zwischenglieder (57) in an den zugeordneten Bauteilen vorgesehene Ausnehmungen (60, 61, 62) einführbar ist.

3. Spannaggregat nach Anspruch 2,
**dadurch gekennzeichnet,**
**dass** bei einer den Zwischengliedern (31, 31') zugeordneten Sicherungseinrichtung (51) deren Sicherungsbolzen (56) auf eine an dem Gehäuse (11) entgegen der Kraft einer Feder (58) axial verschiebbar gelagerten Scheibe (57) einwirkt, an der ein Rastbolzen (59) angebracht ist, der bei Stromausfall und/oder einer Betriebsstörung in dem Stellglied (21, 21') und/oder in den Übertragungsgliedern (30a, 30b) zur Aufrechterhaltung der Spannkraft in dem Kraftspannfutter (3) in eine der in die zugekehrte Stirnfläche eines Zahnrades (36, 36') eingearbeitete Ausnehmungen (60) einführbar ist.

4. Spannaggregat nach Anspruch 3,
**dadurch gekennzeichnet,**
**dass** den Übertragungsgtiedem (30a, 30b) des Stellgliedes (21') kapazitive Sensoren (63, 64), optische Sensoren oder Lichtschranken, mittels denen der Betriebszustand der Übertragungsglieder (30, 30') überwachbar ist, zugeordnet sind, die an die den Zwischengliedern (31, 31') zugeordnete Sicherungseinrichtung (51) angeschlossen sind.

5. Spannaggregat nach Anspruch 1,
**dadurch gekennzeichnet,**
**dass** bei einer Sicherungseinrichtung (51'), die einem mit einem umlaufenden Getriebegehäuse (25) zur Aufnahme eines Untersetzungsgetriebes (24) versehenen Stellglied (21) zugeordnet ist, deren Sicherungsbolzen (56) bei Stromausfall zur Auftrechterhaltung der Spannkraft im Kraftspannfutter (3) unmittelbar in eine der in eine der Stirnflächen des Getriebegehäuses (25) eingearbeitete Ausnehmungen (61) selbsttätig einführbar ist.

6. Spannaggregat nach Anspruch 1,
**dadurch gekennzeichnet,**
**dass** bei einer Sicherungseinrichtung (51 "), die mit einem mit umlaufenden Riemenscheiben (26, 27 bzw. 28, 29) als Übertragungsglieder (30a, 30b) versehenen Stellglied (21') zugeordnet ist, der Sicherungsbolzen (56') unmittelbar oder über eine entgegen der Kraft einer Feder (58') in axial verschiebbaren umlaufenden Scheibe (57'), die mit einem Raststift (59') versehen ist, mit einer mit Ausnehmungen (62) ausgestatteten Riemenscheibe (27) zusammenwirkt.

7. Spannaggregat nach Anspruch 1,
**dadurch gekennzeichnet,**
**dass** die Sicherungseinrichtung (101) durch ein an dem Übertragungsglied (30b) durch die Kraft einer oder mehrerer Federn (105) seitlich anliegendes Koppelglied (102), z.B. in Form eines Ringes (103), gebildet ist, das axial verschiebbar gelagert und mit dem Gehäuse (11) drehfest verbunden ist, und dass bei einer Beschädigung des Übertragungsgliedes (30b) das Koppelglied (102) mit einem das Übertragungsglied (30b) tragenden und mit dem Spannaggregat (1) verbundenen Bauteil, beispielsweise einem der Eingangsglieder (38), formschlüssig, z.B. mittels einrückbarer Verzahnungen (107, 108) oder in Ausnehmungen einführbarer Riegelbolzen, koppelbar ist.

8. Spannaggregat nach Anspruch 7,
**dadurch gekennzeichnet,**
**dass** bei einem Zahnriemen (30') als Übertragungsglied (30a) das Koppelglied (102) z.B. mittels einer Innenverzahnung (107) mit der Verzahnung (108) des Eingangsgliedes (38) koppelbar ist.

9. Spannaggregat nach Anspruch 7,
**dadurch gekennzeichnet,**
**dass** bei einem Flachriemen (30") als Übertragungsglied (30a') das Koppelglied (122) z.B. mittels zusammenwirkender Stirnverzahnungen (127, 128) mit einem das Übertragungsglied (30a)') tragenden Bauteil, z.B. eine Hohlwelle (11'"), koppelbar ist.

10. Spannaggregat nach einem der Ansprüche 7 bis 9,
**dadurch gekennzeichnet,**
**dass** das Koppelglied (102) mittels eines oder mehrerer an dem Gehäuse (11) angebrachte axial gerichtete Bolzen (109) drehfest mit diesem verbunden und verschiebbar auf dem Bolzen (109) gelagert ist.

11. Spannaggregat nach einem der Ansprüche 7 bis 10,
**dadurch gekennzeichnet,**
**dass** zwischen dem Koppelglied (101, 122) und dem Übertragungsglied (30a, 30b, 30b', 30a') eine Anlagescheibe (111, 126) drehfest angeordnet ist.

12. Spannaggregat nach einem der Ansprüche 7 bis 11,
**dadurch gekennzeichnet,**
**dass** das Koppelglied (102) durch einen oder mehrere radial angeordnete und durch dieses über Schrägflächen (118) verstellbaren Rastbolzen (116), der in ein Eingangsglied tragendes Bauteil, z.B. die Hohlwelle (11"), eingearbeitete Ausnehmung (117) einführbar ist, mit diesem drehfest verbindbar ist.

13. Spannaggregat nach einem der Ansprüche 7 bis 11,
**dadurch gekennzeichnet,**
**dass** der Sicherungseinrichtung (101") eine oder mehrere mit dem Koppelglied (102) unmittelbar oder über Zwischenglieder (111') zusammenwirkende Anschlagschalter (132) oder Endschalter (133) zugeordnet sind, mittels denen über eine Steuereinheit (134) die Werkzeugmaschine (2) abschaltbar ist.

## Claims

1. A tensioning assembly (1) for machine tools (2) with a housing (11) that can be connected to a machine spindle (5) in a rotationally fixed arrangement and a screw drive (13) arranged in this housing (11), in which the screw drive (13) interacts with a draw rod (6) linked to a power chuck (3) and by means of which it is possible for rotational movements transmitted to the tensioning assembly (1) to be converted into translational adjustment movements of the draw rod (6), in which at least one actuator (21, 21') for transferring the rotational movements of the drive motor (22) is connected after the tensioning assembly (1) and at least one input element (26, 29) is allocated to the housing (11) with the actuator (21, 21') acting on the input element (26, 29).
**characterised in that,**
one or more securing devices (51, 51', 51"; 101, 101', 101 "; 121) are allocated to the tensioning assembly (1) and/or the actuator (21, 21'), by means of which in the event of a disruption in operation, in particular if there is damage to the transmission elements (30a, 30b) provided between the drive motor (22) and the input elements (26, 29), then intermediate elements (31) connected in front of the screw drive (13) and/or one or more components of the actuator (21, 21') can automatically be blocked by a shape or force-locking coupling with the housing (11) of the tensioning assembly (1) that is connected to the machine spindle (5) of the machine tool (2).

2. The tensioning assembly in accordance with Claim 1,
**characterised in that**
each of the securing devices (51, 51', 51") consists of a magnetic coil (53) inserted in a separate housing (52) and of an armature (54) or of an adjustment piston on which a pressurised agent acts, this agent being in a preferred embodiment compressed air, and of a securing pin (56) attached to the armature (54) or the adjustment piston which can be moved axially by this adjustment piston against the force of a spring (55), in which case the securing pin (56) can be inserted directly or via intermediate elements (57) into openings (60, 61, 62) provided on the assigned components.

3. The tensioning assembly in accordance with Claim 2,
**characterised in that**
in a securing device (51) assigned to the intermediate elements (31, 31'), their securing pin (56) acts on a disc (57) mounted on the housing (11) which can be moved against the force of a spring (58), in which case the disc (57) has a detent pin (59) attached to it which can be inserted into openings (60) worked into the end face of a gear (36, 36') in order to maintain the clamping force in the power chuck (3) in the event of an electrical power failure and/or a disruption in operation of the transmission element (21, 21').

4. The tensioning assembly in accordance with Claim 3,
**characterised in that**
the transmission elements (30a, 30b) of the actuator (21') have capacitive sensors (63, 64), optical sensors or light barriers assigned to them, by means of which the operational status of the transmission elements (30, 30') can be monitored, which are connected to the securing device (51) assigned to the intermediate elements (31, 31').

5. The tensioning assembly in accordance with Claim 1,
**characterised in that**
in a securing device (51') that is assigned to an actuator (21) provided with a circumferential gear unit housing (25) for accommodating a step-down gear unit (24), its securing pin (56) is able to be inserted directly and automatically into one of the openings (61) worked into the end faces of the gear unit housing (25) in order to maintain the clamping force in the power chuck (3) in the event of an electrical power failure.

6. The tensioning assembly in accordance with Claim 1,
**characterised in that**
in a securing device (51") that is assigned to an actuator (21') provided with circumferential belt sheaves (26, 27 or 28, 29) as transmission elements (30a, 30b), the securing pin (56') interacts with a belt sheave (27) provided with openings (62) either directly or via a disc (57') provided with a detent pin (59') that can be moved axially against the force of a spring (58').

7. The tensioning assembly in accordance with Claim 1,
**characterised in that**
the securing device (101) is formed by a coupling element (102), e.g. in the form of a ring (103), held in contact with the side of the transmission element (30b) by the force of one or more springs (105) which can be shifted axially and is in a rotationally fixed connection with the housing (11), and that if there is damage to the transmission element (30b) then coupling element (102) can be connected to a component, for example one of the input elements (38), carrying the transmission element (30b) and connected to the tensioning assembly (1), in a shape-locking connection, e.g. by means of engageable splines (107, 108) or by detents pins that can be inserted into openings.

8. The tensioning assembly in accordance with Claim 7,
**characterised in that**
with a toothed belt (30') as transmission element (30a), the coupling element (102) can be coupled with the splines (108) of the input element (38), e.g. by means of internal splines (107).

9. The tensioning assembly in accordance with Claim 7,
**characterised in that**
with a toothed belt (30") as transmission element (30a), the coupling element (122) can be coupled with a component, e.g. a hollow shaft (11"'), carrying the transmission element (30a)'), e.g. by means of interacting spur gear splines (127,128).

10. The tensioning assembly in accordance with one of Claims 7 to 9,
**characterised in that**
the coupling element (102) is mounted in a rotationally fixed connection with the housing (11) and is mounted in a moveable connection on the pin (109) by means of one or more axially aligned pins (109) attached to the housing (11).

11. The tensioning assembly in accordance with one of Claims 7 to 10,
**characterised in that**
a contact disc (111, 126) is arranged in a rotationally fixed position between the coupling element (101, 122) and the transmission element (30a, 30b, 30b', 30a').

12. The tensioning assembly in accordance with one of Claims 7 to 11,
**characterised in that**
the coupling element (102) can be connected in a rotationally fixed connection to a component, e.g. the hollow shaft (11") carrying an input element, by means of one or more radially arranged detent pins (116) that are adjustable by this means using inclined surfaces (118), in which the detent pin (116) can be inserted into an opening (117) worked into the component, e.g. the hollow shaft (11 ") carrying an input element.

13. The tensioning assembly in accordance with one of Claims 7 to 11,
**characterised in that**
the securing device (101") has one or more stop switches (132) or limit switches (133) allocated to it which interact with the coupling element (102) directly or via intermediate elements (111'), by means of which switches (132 or 133) the machine tool (2) can be switched off.

## Revendications

1. Agrégat de serrage (1) pour machines-outils (2), équipé d'un boîtier (11) qui se laisse raccorder à la broche (5) de manière à être entraîné en rotation, et d'un entraînement à filetage (13) intégré dans celui-ci et collaborant avec une tige de traction (6) raccordée à un mandrin de serrage motorisé (3) et à l'aide duquel des mouvements rotatoires dirigés par un moteur d'entraînement électrique commutable (22) vers l'agrégat de serrage (1) sont transformés en mouvements de translation de la tige de traction (6), où l'agrégat de serrage (1) est suivi par au moins un actionneur (21, 21') pour la transmission des mouvements rotatoires du moteur d'entraînement (22) et où il est assigné au boitier (11) au moins un élément d'entrée (26, 29) sur lequel agit l'actionneur (21, 21'),
**caractérisé en ce que**,
à l'agrégat de serrage (1) et/ou à l'actionneur (21, 21'), il est assigné un ou plusieurs équipements de sécurité (51, 51', 51"; 101, 101', 101"; 121) qui permettent en cas de perturbation du service, notamment en cas d'endommagement d'éléments de transmission (30a, 30b) montés entre le moteur d'entraînement (22) et les éléments d'entrée (26, 29), de bloquer automatiquement des éléments intermédiaires (31) précédant l'entraînement à filetage (13) et/ou un ou plusieurs composants de l'actionneur (21, 21') par un couplage par engagement et par entraînement avec le boîtier (11) de l'agrégat de serrage (1) faisant corps avec la broche (5) de la machine-outil (2).

2. Agrégat de serrage d'après la revendication 1,
**caractérisé en ce que**
les équipements de sécurité (51, 51', 51") consistent respectivement d'une bobine magnétique (53) et d'un induit (54) montés dans un boîtier séparé (52) ou d'un piston de réglage soumis à la force d'un milieu de pression, de préférence de l'air comprimé, et d'un boulon de sécurité (56) axialement réglable contre la force d'un ressort (55) et monté sur l'induit (54) ou sur le piston de réglage, qui se laisse insérer directement ou moyennant des éléments intermédiaires (57) dans des évidements (60, 61, 62) prévus dans les composants assignés.

3. Agrégat de serrage d'après la revendication 2,
**caractérisé en ce que**
sur un équipement de sécurité (51) assigné aux éléments intermédiaires (31, 31'), son boulon de sécurité (56) agit sur un disque (57) logé de manière axialement déplaçable contre la force d'un ressort (58), sur lequel il est prévu un boulon de crantage (59) qui, en cas de panne du réseau et/ou en cas de perturbation du service de l'actionneur (21, 21') et/ou des éléments de transmission (30a, 30b), se laisse insérer dans un des évidements (60) pratiqués dans la face frontale de la roue dentée (36, 36'), afin de préserver la force de serrage du mandrin de serrage (3).

4. Agrégat de serrage d'après la revendication 3,
**caractérisé en ce que**,
aux éléments de transmission (30a, 30b) de l'actionneur (21'), il est assigné des capteurs capacitifs (63, 64), des capteurs optiques ou des barrières lumineuses permettant de surveiller l'état de service des éléments de transmission (30, 30'), et qui sont raccordés à l'équipement de sécurité (51) assigné aux éléments intermédiaires (31, 31').

5. Agrégat de serrage d'après la revendication 1,
**caractérisé en ce que**,
dans le cas d'un équipement de sécurité (51') assigné à un actuateur (21) muni d'un boîtier d'engrenage rotatif (25) recevant un engrenage démultiplicateur (24), son boulon de sécurité (56) se laisse, en cas de panne du réseau, insérer automatiquement et directement dans un des évidements (61) pratiqués dans une des faces frontales du boîtier d'engrenage (25) afin de préserver la force de serrage du mandrin de serrage (3).

6. Agrégat de serrage d'après la revendication 1,
**caractérisé en ce que**,
dans le cas d'un équipement de sécurité (51") assigné à un actuateur (21') muni de courroies (26, 27 ou 28, 29) en tant qu'éléments de transmission (30a, 30b), le boulon de sécurité (56') collabore directement ou contre la force d'un ressort (58') dans le disque axialement déplaçable (57') muni d'un goujon de crantage (59'), avec la courroie (27) équipée d'évidements (62).

7. Agrégat de serrage d'après la revendication 1,
**caractérisé en ce que**
l'équipement de sécurité (101) est formé par un élément de couplage (102), p. ex. sous la forme d'un anneau (103), portant, soumis à la force d'un ou de plusieurs ressorts (105), latéralement sur l'élément de transmission (30b), l'élément de couplage étant axialement déplaçable et raccordé en rotation avec le boîtier (11), et que, en cas d'endommagement de l'élément de transmission (30b), l'élément de couplage (102) se laisse accoupler par engagement, p. ex. moyennant des dentures s'engrenant (107, 108) ou des boulons insérés dans des évidements, à un composant portant l'élément de transmission (30b) et raccordé à l'agrégat de serrage (1), p. ex. un des éléments d'entrée (38).

8. Agrégat de serrage d'après la revendication 7,
**caractérisé en ce que**,
dans le cas d'une courroie dentée (30') en tant qu'élément de transmission (30a), l'élément de couplage (102) se laisse accoupler moyennant p. ex. une denture intérieure (107), avec la denture (108) de l'élément d'entrée (28).

9. Agrégat de serrage d'après la revendication 7,
**caractérisé en ce que**,
dans le cas d'une courroie plate (30") en tant qu'élément de transmission (30a'), l'élément de couplage (122) se laisse accoupler moyennant p. ex. des crantages droits (127, 128) collaborant ensemble, avec un composant portant l'élément de transmission (30a'), p. ex. un arbre creux (11"').

10. Agrégat de serrage d'après une des revendications 7 à 9,
**caractérisé en ce que**
moyennant un ou plusieurs boulons (109) montés axialement sur le boîtier (11), l'élément de couplage (102) suit rigidement la rotation de celui-ci, mais se laisse déplacer sur le boulon (109).

11. Agrégat de serrage d'après une des revendications 7 à 10,
**caractérisé en ce que**,
entre l'élément de couplage (101, 122) et l'élément de transmission (30a, 30b, 30b', 30a'), il est monté un disque de butée (111, 126) suivant rigidement la rotation.

12. Agrégat de serrage d'après une des revendications 7 à 11,
**caractérisé en ce que**
moyennant un ou plusieurs boulons de crantage radiaux (116) réglables à l'aide de faces obliques (118) et se laissant insérer dans un évidement (117) pratiqué dans un composant portant l'élément d'entrée, p. ex. un arbre creux (11"), l'élément de couplage (102) se laisse raccorder en rotation avec celui-ci.

13. Agrégat de serrage d'après une des revendications 7 à 11,
**caractérisé en ce que**,
à l'équipement de sécurité (101"), il est assigné un ou plusieurs contacteurs de butée (132) ou contacteurs de fin de course (133) collaborant soit directement soit moyennant des éléments intermédiaires (111') avec l'élément de couplage (102), et qui permettent d'arrêter la machine-outil (2) par l'unité de commande (134).
